# EUROPÄISCHE PATENTSCHRIFT

(11) **EP 3 033 789 B1**
(45) Veröffentlichungstag und Bekanntmachung des Hinweises auf die Patenterteilung: **13.03.2019**
(21) Anmeldenummer: 14733651.5
(22) Anmeldetag: 30.06.2014
(51) Int. Cl.: H01M 8/04

(54) **VEREINFACHUNG DES ELEKTRISCHEN SYSTEMS VON BRENNSTOFFZELLEN DURCH VERARMUNG DER KATHODENVERSORGUNG**
SIMPLIFICATION OF THE ELECTRICAL SYSTEM OF FUEL CELLS BY MEANS OF DEPLETION OF THE CATHODE SUPPLY
SIMPLIFICATION DU SYSTÈME ÉLECTRIQUE DE PILES À COMBUSTIBLE PAR APPAUVRISSEMENT DE L'ALIMENTATION DES CATHODES

(30) Priorität: 14.08.2013 DE 102013216156
(43) Veröffentlichungstag der Anmeldung: 22.06.2016
(73) Patentinhaber: Robert Bosch GmbH, 70442 Stuttgart (DE)
(72) Erfinder: KEMMER, Helerson, 71665 Vaihingen (DE)
(86) Internationale Anmeldenummer: PCT/EP2014/063816
(87) Internationale Veröffentlichungsnummer: WO 2015/022114

(56) Entgegenhaltungen:
- WO-A1-2010/031601
- DE-C1- 19 620 501
- JP-A- S5 622 052
- US-A1- 2002 058 167
- US-A1- 2008 038 602
- US-A1- 2009 220 831

## Beschreibung

Die vorliegende Erfindung betrifft ein Verfahren zum Betreiben einer Brennstoffzelle über Brennstoffzellensystem gemäß dem Anspruch 1.

Brennstoffzellen sind aus Sicherheitsgründen vom Hochvolt (HV)- Netz oder - Bordnetz durch Schütze bzw. Hauptschütze des Brennstoffzellensystems getrennt. Erst im Betrieb, beispielsweise im Betrieb eines mit der Brennstoffzelle betriebenen Fahrzeuges, werden die Schütze geschlossen und die Brennstoffzelle mit dem HV-Bordnetz des Fahrzeuges verbunden. Beim Abstellen des Fahrzeuges, d. h. beim Ausschalten des Fahrzeuges, werden die Hauptschütze wieder geöffnet und die Brennstoffzelle bis zum nächsten Startvorgang wieder vom HV-Bordnetz des Fahrzeuges getrennt. Während eines Startvorgangs des Fahrzeuges ist die Brennstoffzelle bekannterweise von dem HV-Bordnetz des Fahrzeuges getrennt. Denn zum Ende des Startvorgangs können bei einem Betrieb der Brennstoffzelle gemäß dem Stand der Technik hohe Spannungsunterschiede von bis zu mehreren 100V zwischen der Brennstoffzelle und dem Bordnetz auftreten. Diese Spannungsunterschiede treten auf, da im ersten Schritt beim sogenannten (Gefrier-) Start die Aufheizung der Brennstoffzelle bzw. eines Brennstoffzellenstacks erfolgt, um Einfrierungen der Gaskanäle im Normalbetrieb zu verhindern. Nachdem also die Brennstoffzelle oder der Stack eine ausreichende Spannung von beispielsweise 400 V erreicht hat, wird in der Regel, um Schäden vom Bordnetz und der Brennstoffzelle abzuwenden, ein Vorladewiderstand mit eigenem Schütz verwendet. Dadurch fließt ein geringer Strom durch den relativ hochohmigen Vorladewiderstand.

Der Vorladewiderstand mit eigenem Schütz wird bekannterweise entweder in dem der Brennstoffzelle bzw. dem Brennstoffzellenstack nachgeschalteten DC/DC-Wandler integriert oder ist aus diskreten Bauteilen aufgebaut. Da die erforderlichen Komponenten zum Integrieren eines Vorladewiderstandes mit eigenem Schütz in dem DC/DC-Wandler oder die einzelnen Bauteile im HV-Bereich eingesetzt werden, tragen sie entscheidend zu den Systemkosten des Brennstoffzellensystems bei. Zudem sind die Komponenten für den Vorladewiderstand mit eigenem Schütz bauraumintensiv.

### STAND DER TECHNIK

Ein Vorladewiderstand mit eigenem Schütz in einem Brennstoffzellensystem ist beispielsweise aus der JP2005295697A bekannt. Die Funktion des Vorladewiderstandes ist dabei die Angleichung der Brennstoffzellenspannung an eine Bordnetzspannung. Ist über den Vorladewiderstand eine Spannungsangleichung zwischen dem Bordnetz und der Brennstoffzelle bzw. dem Stack erfolgt, werden die Hauptschütze geschlossen und der Strom fließt durch den Hauptpfad, der die Brennstoffzelle mit dem Bordnetz verbindet. Dabei wird der Schütz des Vorladewiderstandes geöffnet und der Startvorgang der Brennstoffzelle ist nach diesem Schritt abgeschlossen.

Die DE 101 27 892 A1 offenbart eine Startsteuervorrichtung für ein Fahrzeug mit Brennstoffzelle. Beim Startvorgang der Brennstoffzelle kommt eine Schaltung mit einem Strombegrenzer zum Einsatz, die eine direkte Verbindung der Brennstoffzelle mit einem eine Energiespeichereinheit aufweisenden Verbrauchernetz unterbindet. Dies wird unter anderem durch die Strombegrenzungsvorrichtung so lange ausgeführt, bis eine Differenz zwischen der Ausgangsspannung der Brennstoffzelle und einer Spannung der Energiespeichereinheit eine vorgegebene Spannungsdifferenz erreicht. Dadurch wird gemäß der DE 101 27 892 A1 ein Zufluss hohen Stroms von der Brennstoffzelle zur Energiespeichereinheit verhindert.

Aus der US 2009/220831 A1 ist ein Wasserstoffpassivierungsabschaltsystem für ein Brennstoffzellenkraftwerk bekannt. Während des Abschaltens der Anlage kann Wasserstoffbrennstoff zwischen einem Anodenströmungspfad und einem Kathodenströmungspfad übertragen werden, während ein Niederdruckwasserstoffgenerator verwendet wird, welcher selektiv eine adäquate Menge an Wasserstoff erzeugt und die Strömung des Niederdruck-Wasserstoffs stromabwärts von einem Wasserstoffeinlassventil in die Brennstoffzelle steuert, um die Brennstoffzelle in einem passiven Zustand zu führen.

Die WO 2010/031601 A1 beschreibt ein Verfahren zum Betreiben einer PEM-Brennstoffzelle mit einer Anodenzufuhrschaltung und einer Kathodenzufuhrschaltung zum Speisen einer Anodenseite mit einem Reaktionsgas und zum Speisen einer Kathodenseite mit einem Kathodengas. Das Verfahren zum Herunterfahren und zum Starten eines Elektrizitätserzeugungsvorgangs des Brennstoffzellensystems umfasst in dem Abschaltmodus die folgenden Schritte: Verringern der Zufuhr von Reaktionsgas und Kathodengas in Reaktion auf ein Abschaltsignal, Überwachen einer Ausgangsspannung von mindestens einer Zelle eines Brennstoffzellenstapels, Überwachen des Reaktionsgasdrucks und des Kathodengasdrucks, elektrisches Kurzschließen der mindestens einen Brennstoffzelle wenn die Ausgangsspannung einen vordefinierten Spannungspegel erreicht, mindestens eine Druckreduktion der Anodenseite auf ein vorbestimmtes Druckniveau mittels mindestens einer Pumpe und Füllen und / oder Spülen von zumindest der Anodenseite mit einem Inertgas.

Die DE 196 20 501 C1 offenbart ein Verfahren zum Betreiben einer aus einer Anzahl von Brennstoffzellen gebildeten Brennstoffzellenanordnung, bei dem an einem Anodeneingang Brenngas zu den Anoden der Brennstoffzellen zugeführt, an einem Anodenausgang Anodenabgas von den Anoden abgeführt, an einem Kathodeneingang Kathodengas zu den Kathoden der Brennstoffzellen zugeführt und an einem Kathodenausgang das Kathodenabgas von den Kathoden abgeführt wird. Gemäß der Erfindung wird zumindest an einem Punkt des Strömungsweges von Kathodengas und/oder Anodengas die Sauerstoffkonzentration mittels einer Lambda-Sonde gemessen und es werden die Ströme von Anodengas und/oder Kathodengas in Abhängigkeit von dem Messwert für die Sauerstoffkonzentration eingestellt. Besonders vorteilhaft ist das Verfahren zur Regelung der Gaszusammensetzung beim Betreiben einer Brennstoffzellenanordnung, bei der ein Teil des Kathodenabgases vom Kathodenausgang zum Kathodeneingang zurückgeführt und zumindest ein Teil des Anodenabgases von Anodenausgang dem rückgeführten Kathodengas beigemischt wird.

Aus der DE 10 2009 023 882 A1 ist ein System und ein Verfahren zur Verbesserung der Inbetriebnahmezuverlässigkeit eines Brennstoffzellensystems bekannt. Dabei ist es vorgesehen, eine Hochfrequenzwiderstands-Messung des Brennstoffstapels bereitzustellen, wobei aufgrund der Messergebnisse eine oder mehrere Abhilfeaktionen ausgeführt werden, um ein Austrocknen der Membranen des Brennstoffzellenstapels zu verhindern. Eine dieser Abhilfeaktionen kann dabei eine Begrenzung einer Luftströmung zu der Kathodenseite des Brennstoffzellenstapels sein. Dies hat zur Folge, dass der Trocknungseffekt der Kathodenluft auf die Membranen reduziert wird.

### OFFENBARUNG DER ERFINDUNG

Aufgabe der Erfindung ist es, die im Stand der Technik genannten Nachteile zumindest teilweise zu beheben. Ferner ist es insbesondere die Aufgabe der vorliegenden Erfindung ein Verfahren zum Betrieb eines Brennstoffzellensystems zur Verfügung zu stellen, das eine Betriebsstrategie zulässt, bei dem eine Verarmung der Luftzufuhr, insbesondere eine Verarmung der Kathodenluft, am Ende des Startvorganges erfolgt.

Diese Aufgabe wird ausgehend von einem Verfahren gemäß dem Oberbegriff des Anspruchs 1 in Verbindung mit dessen kennzeichnenden Merkmalen gelöst. Vorteilhafte Weiterbildungen der Erfindung sind in dem abhängigen Anspruch angegeben.

Das erfindungsgemäße Brennstoffzellensystem schließt die technische Lehre ein, dass die Gaszuführung und die Abluftleitung über wenigstens ein Gasstromregulierungselement verbunden sind, welches in Abhängigkeit eines Betriebsstatus der Brennstoffzelle die Gaszuführung in Richtung der Abluftleitung und/oder die Abluftleitung in Richtung der Gaszuführung öffnet. Dadurch, dass über das Gasstromregulierungselement Abluft in die Gaszuführung, also Abluft mit dem Kathodengas vermischt wird, kommt es zu einer Verdünnung des Kathodengases in der Gaszuführung und letztendlich in dem mit der Gaszuführung verbundenen Kathodenraum. Dadurch kann bei einem (Gefrier-) Start effektiv der Strom bzw. die in der Brennstoffzelle anliegende Spannung reduziert werden, um das Spannungsniveau der Brennstoffzelle nach dessen (Gefrier-) Start auf das Spannungsniveau des HV-Bordnetzes zu senken, um dann beim Erreichen ca. des Spannungsniveaus des HV-Bordnetzes die Brennstoffzelle über Hauptschütze mit dem HV-Bordnetz zu verbinden. Zusätzlich kann zur Verarmung des Kathodengases im Kathodenraum das Kathodengas vor dem Erreichen des Kathodenraumes über das Gasstromregulierungselement in die Abluftleitung geleitet werden, wobei das Gasstromregulierungselement und die Verbindung der Gaszuführung in Richtung der Abluftleitung die Funktion eines Bypasses bzw. einer Bypassdrosselklappe haben, über welche die Luft am Kathodenraum vorbeigeführt wird.

In beiden Fällen, nämlich bei der Verdünnung des Kathodengases mit der Abluft, als auch beim Vorbeiführen des Kathodengases über einen Bypass an dem Kathodenraum kommt es zu einer Verarmung des Kathodengases im Kathodenraum und somit zu einem Spannungsabfall in der Brennstoffzelle.

Natürlich kann die Verarmung des Kathodengases im Kathodenraum auch durch eine Kombination der Verdünnung des Kathodengases durch die Abluft und dem Vorbeiführen des Kathodengases an dem Kathodenraum über einen Bypass erfolgen.

Die Verbindung der Abluftleitung mit der Gaszuführung kann den Funktionen angepasst über zwei Gasstromregulierungselemente erfolgen, wobei ein Gasstromregulierungselement die Abluft in Richtung des Abluftstroms mit der Gaszuführung verbindet, und wobei das andere Gasstromregulierungselement in entgegengesetzter Richtung zu dem ersten Gasstromregulierungselement die Gaszuführung in Richtung des Gasstromes mit der Abluftleitung verbindet.

Natürlich ist es auch denkbar zur weiteren Miniaturisierung des erfindungsgemäßen Brennstoffzellensystems das Gasstromregulierungselement so auszugestalten, dass es in beide Richtungen öffnet, nämlich zum einen die Abluft in die Gaszuführung leitet und zum anderen das Kathodengas in die Abluftleitung leitet.

Eine Brennstoffzelle, die in dem erfindungsgemäßen Brennstoffzellensystem betrieben wird, kann eine einzelne Brennstoffzelle wie auch gleichermaßen ein Brennstoffzellenstack umfassen, wobei im Folgenden in nicht einschränkender Weise die Erfindung für eine im Brennstoffzellensystem betriebene Brennstoffzelle beschrieben wird. Die Brennstoffzelle weist dabei einen eine Anode umfassenden Anodenraum und einen eine Kathode umfassenden Kathodenraum auf, welche beispielsweise durch eine geeignete Elektrolytmembran voneinander getrennt sind.

Als Betriebsstatus der Brennstoffzelle wird vorliegend der Betrieb der Brennstoffzelle bei deren Inbetriebnahme, also bei deren Start und insbesondere bei einem (Gefrier-) Start der Brennstoffzelle und der Betrieb der Brennstoffzelle nach deren Inbetriebnahme, nämlich im Betrieb mit dem HV-Netz oder HV-Bordnetz beispielsweise eines Fahrzeuges, insbesondere eines Kraftfahrzeuges, verstanden.

Ein Gasstromregulierungselement im Sinne der vorliegenden Erfindung kann dabei insbesondere ein Element sein, mit dem das Gas bzw. die Abluft regulierbar ist, bzw. die Abluft in den Gasstrom oder das Gas in den Abluftstrom lenkbar ist. Im Falle der Luftabzweigung der Abluft über das Gasstromregulierungselement in die Gaszuführung für das Kathodengas, wird dieses durch die Abluft, bzw. durch das Brennstoffzellenabgas verdünnt. Dabei übernimmt das Gasstromelement die Funktion einer Abluft- bzw. Abgasrückführungsdrosselklappe.

Eine Kathodengasquelle im Sinne der vorliegenden Erfindung kann insbesondere eine Quelle eines Gases sein, das bei einem herkömmlichen Gebrauch in eine Kathode eingeleitet wird und unter Berücksichtigung der in dem Kathodenraum ablaufenden Reaktion während des Betriebs der Brennstoffzelle aus der Kathode bzw. dem Kathodenraum ausgeleitet wird. Insbesondere kann die Kathodengasquelle die das Brennstoffzellensystem ungebende Luft sein. Im Regelfall handelt es sich bei dem Kathodengas um Sauerstoff aus der Umgebungsluft.

Die Kathodengasquelle ist in vorteilhafter Weise mit einer Gaszuführung verbunden, durch welche das Kathodengas in den Kathodenraum eingeleitet wird. Die Gaszuführung kann beispielsweise eine geeignete Leitung oder auch ein Anschluss der Kathodengasquelle an den Kathodenraum sein.

In vorteilhafter Weise kann die Luftverarmung der Kathodenluft auch durch eine Absenkung einer Drehzahl eines Verdichters, insbesondere eines Luftverdichters erfolgen, der insbesondere mit der Gaszuführung verbunden ist. Vorzugsweise ist der Luftverdichter eine Turboverdichtereinheit, die zwischen den beiden Gasstromregulierungselementen im Brennstoffzellensystem angeordnet ist, und die erfindungsgemäß durch Drosselung der Drehzahl zur Erniedrigung des Massenstroms des Kathodengases einsetzbar ist.

In besonders bevorzugter Weise ist zur Ermittlung des Sauerstoffgehaltes, d. h. zur Ermittlung des Kathodengases wenigstens ein Luftmassenstromsensor mit der Gaszuführung verbunden.

Zusätzlich zu dem Gastromregulierungselement, welches die Abluftleitung in Richtung der Abluftströmung mit der Gaszuführung verbindet, ist wenigstens ein weiteres Gastromregulierungselement mit einer Abluftleitung verbunden, über die Gas aus dem Kathodenraum abgeführt werden kann. Um Abluft aus dem Kathodenraum in die Umgebung des Brennstoffzellensystems abzuführen, ist die Abluftleitung mit dem Kathodenraum verbunden.

Bei Brennstoffzellensystemen ohne Abluft- bzw. Abgasrückführung über das Gasstromregulierungselement in die Gaszuführung oder bei Systemen ohne Brennstoffzellen- bzw. Stackbypass, ist der Luftmassenstromsensor vorzugsweise vor dem Verdichter mit der Gaszuführung verbunden. Der Verdichter ist in diesem Fall zwischen dem Kathodenraum und dem Luftmassenstromsensor angeordnet.

Bei Systemen ohne Abluft- bzw. Abgasrückführung ist der Luftmassenstromsensor vor der Brennstoffzelle angeordnet und mit der Gaszuführung verbunden.

Bei Systemen mit Abluft- bzw. Abgasrückführung ist der Luftmassenstromsensor vorteilhafterweise in Kombination mit einer λ-Sonde vor der Brennstoffzelle mit der Gaszuführung verbunden.

Erst nach Begrenzung der Spannung durch die Verarmung der Kathodenluft wird eine Verbindung der Brennstoffzelle zum Bordnetz geschaltet, nämlich vorzugsweise dann, wenn sich die Spannungsniveaus des HV-Bordnetzes und der Brennstoffzelle zumindest annähernd angeglichen haben. Dazu werden die Hauptschütze zugeschaltet. Der elektrische Strom ist an diesem Punkt durch das reduzierte Sauerstoffangebot bzw. durch die Reduzierung bzw. Verdünnung des Kathodengases auf einen geringen Wert begrenzt, der weit unter dem maximalen Strom der Brennstoffzelle liegt. Somit kann auf einfache Weise eine Beschädigung von elektrischen Bauteilen im HV-Bordnetz und dem Brennstoffzellensystem verhindert werden und auf diese Weise die Dauerhaltbarkeit des HV-Bordnetzes und insbesondere der Brennstoffzelle erhöht werden.

Aufwendige und kostenintensive Schaltungen, beispielsweise durch Integration eines Vorladewiderstand mit eigenem Schütz, zur Kompensation eines hohen Spannungsunterschieds können so vermieden werden.

Nach Zuschaltung der Hauptschütze kann die Strom- bzw. Kathodengasbegrenzung, insbesondere die Sauerstoffmengenbegrenzung, aufgehoben werden, damit der gewünschte Strom für den Normalbetrieb beispielsweise des Fahrzeuges fließen kann. Die Zuschaltung der Hauptschütze stellt dabei insbesondere das Ende des (Gefrier-) Startvorgangs dar.

Um Wiederholungen bezüglich der Vorteile des erfindungsgemäßen Verfahrens zu vermeiden, wird auf die vorteilhafte Ausgestaltung des erfindungsgemäßen Parkassistenzsystems sowie auf die Figuren und die dazugehörige Figurenbeschreibung verwiesen und es wird vollumfänglich auf diese zurückgegriffen.

### Bevorzugte Ausführungsbeispiele

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Fig. 1: eine mögliche Topologie eines Luftsystems eines Brennstoffzellensystems für die Realisierung der Anbindung einer Brennstoffzelle an ein HV-Bordnetz ohne Vorladewiderstand und entsprechendem Schutz,
- Fig. 2: schematisch die Anbindung einer Brennstoffzelle an ein HV-Bordnetz über einen Vorladewiderstand mit eigenem Schütz sowie Hauptschützen,
- Fig. 3: Typische Spannungen an der Brennstoffzelle und dem HV-Bordnetz nach Zuschaltung des Vorladewiderstandschutzes,
- Fig. 4: eine erfindungsgemäße Anbindung einer Brennstoffzelle an ein HV-Bordnetz ohne Vorladewiderstand mit eigenem Schütz,
- Fig. 5: auf der linken Seite einen Startablauf mit Vorladewiderstand mit eigenem Schütz und auf der rechten Seite den zu der linken Seite entsprechenden Schaltungszustand mit typischen Spannungswerten,
und
- Fig. 6: auf der linken Seite den erfindungsgemäßen Startablauf ohne Vorladewiderstand mit eigenem Schütz und auf der rechten Seite den zu der linken Seite entsprechenden Schaltungszustand mit typischen Spannungswerten.

In den unterschiedlichen Figuren sind gleiche Teile stets mit denselben Bezugszeichen versehen, weshalb diese in der Regel auch nur einmal beschrieben werden.

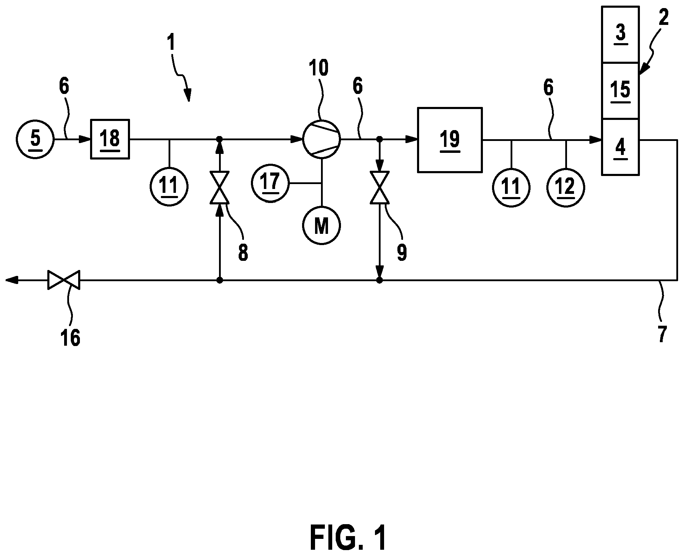

In Fig. 1 ist eine mögliche Topologie eines Luftsystems für das erfindungsgemäße Brennstoffzellensystem 1 gezeigt. Das Brennstoffzellensystem 1, weist eine Brennstoffzelle 2 auf, die einen Anodenraum 3 und durch eine Stackkühlung 15 von dem Anodenraum 3 getrennten Kathodenraum 4 aufweist. Der Kathodenraum 4 ist über eine Gaszuführung 6 mit einer Kathodengasquelle 5 verbunden, vorliegend mit der Umgebungsluft. Zudem ist der Kathodenraum 4 mit einer Abluftleitung 7 verbunden, über die Reaktionsgas aus dem Kathodenraum 4 heraus geleitet wird. Am Ende der Abluftleitung 7, d. h. am Ende des Abluftstromes ist ein Gasstromregulierungselement zur Drosselung der Abluft mit der Abluftleitung 7 verbunden. Zudem sind weitere Gasstromregulierungselemente 8 und 9 zwischen der Abluftleitung 7 und der Gaszuführung 6 angeordnet, die die Abluftleitung 7 und die Gaszuführung 6 regulierbar miteinander verbinden. Das Gastromregulierungselement 8, welches hier als Abgasrückführungsdrossel wirkt, hat dabei die Funktion Abluft aus der Abluftleitung 7 in die Gaszuführung 6 zu leiten um das Kathodengas mit der Abluft zu verdünnen.

Das Gastromregulierungselement 9 wirkt hingegen als Bypassdrosselklappe und hat damit die Funktion, Kathodengas am Kathodenraum 4 vorbeizuführen. Zwischen dem Gastromregulierungselement 8 und dem Gastromregulierungselement 9 ist in der Gaszuführung 6 ein Verdichter 10 angeordnet, über dessen Drehzahl der Massenstrom des Kathodengases regulierbar ist. Insbesondere durch die Reduzierung der Drehzahl des Verdichters 10 lässt sich der Massenstrom des Kathodengases reduzieren. Im Bereich des Verdichters 10 ist ein Drehzahlermittler 17 angeordnet, über den sich indirekt über die Ermittlung der Drehzahl der Massenstrom des Kathodengases und sich darüber insbesondere der Sauerstoffgehalt des Kathodeneintrittsgases ermitteln lässt. Vor dem Verdichter 10 ist in üblicher Weise ein Luftfilter 18 in der Gaszuführung 6 angeordnet, der zum Absondern von beispielsweise Staubpartikeln dient, damit diese nicht in das Brennstoffzellensystem 1 und insbesondere nicht in die Brennstoffzelle 2 gelangen. Vor dem Verdichter 10 ist in Richtung des Gasstromes zum Kathodenraum 4 hin ein Luftmassenstromsensor 11 in der Gaszuführung 6 angeordnet, der zur Ermittlung der Zuführung des Kathodeneintrittsgases dient. Hinter dem Verdichter 10 und hinter der regulierbaren Ableitung des Kathodengases über das Gastromregulierungselement 9 ist vor dem Kathodenraum 4 in üblicher Bauart ein Wärmetauscher 19, der gleichzeitig auch als Befeuchter dient, mit der Gaszuführung 6 verbunden.

Auf den Wärmetauscher 19 bzw. Befeuchter folgt in Gasstromrichtung ein weiterer Luftmassenstromsensor 11 und eine λ-Sonde 12, die in Kombination miteinander zur Bestimmung und Messung des Sauerstoffgehaltes des Kathodeneintrittsgases dienen, bzw. dessen Verdünnung mit der Abluft, welche über das Gastromregulierungselement 9 in die Gaszuführung 6 geleitet werden kann, messen.

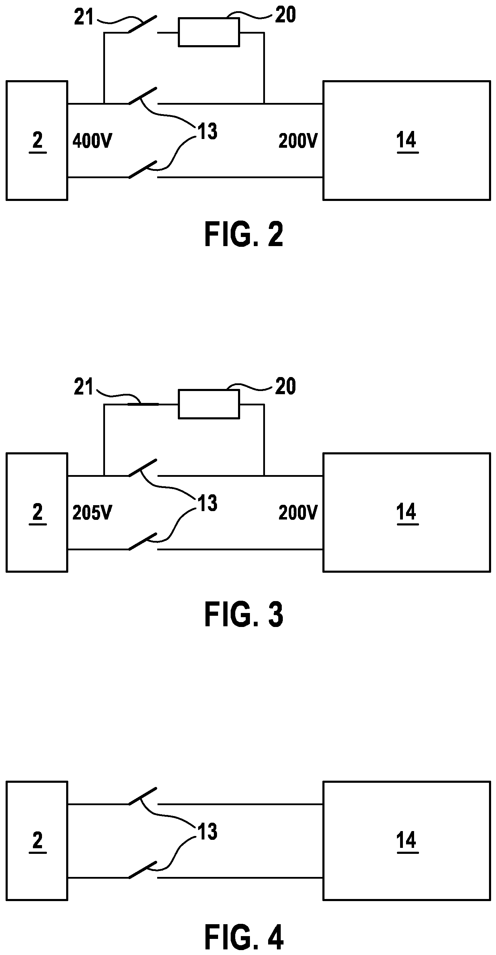

Die Fig. 2 und Fig. 3 zeigen die Anbindung einer aus dem Stand der Technik bekannten Brennstoffzelle 2 bzw. eines bekannten Brennstoffzellensystems 1 an das HV-Bordnetz 14 beispielsweise eines Fahrzeuges mit 200 V. Für die Initiierung eines Startvorganges der Brennstoffzelle 2, also bei einem (Gefrier-) Start der Brennstoffzelle 2 wird zur Aufheizung der Brennstoffzelle 2, um Einfrierungen der Gaskanäle im Normalbetrieb zu verhindern, bei geöffneten Hauptschützen 13 und Vorladewiderstand 20 mit geöffnetem eigenem Schütz 21, wie in Fig. 1 dargestellt, die Brennstoffzelle 2 bis zum Erreichen einer Spannung von vorliegend 400 V gestartet. Nachdem die Brennstoffzelle 2 diese Spannung erreicht hat, wird, wie in Fig. 3 gezeigt, der Vorladewiderstand 20 mit eigenem Schütz 21 geschlossen. Der Strom fließt dabei durch den hochohmigen Vorladewiderstand 20 und wird dadurch auf ca. das Spannungsniveau des HV-Bordnetzes 14 reduziert, vorliegend auf 205 V. Hat der Strom, der von der Brennstoffzelle 2 erzeugt wird, ca. das Spannungsniveau des HV-Bordnetzes 14 erreicht, schließen die Hauptschütze 13 und der (Gefrier-) Startvorgang der Brennstoffzelle 2 ist damit beendet.

Die Fig. 4 zeigt die Anbindung des erfindungsgemäßen Brennstoffzellensystems 1 an ein HV-Bordnetz 14. Wie zu erkennen ist, kommt das erfindungsgemäße Brennstoffzellensystem 1 ohne einen Vorladewiderstand mit eigenem Schütz aus. Eine Verbindung mit dem HV-Bordnetz 14 erfolgt lediglich zum Abschließen des (Gefrier-) Starts der Brennstoffzelle 2 über Hauptschütze 13. Vorliegend sind die Hauptschütze 13 jedoch geöffnet.

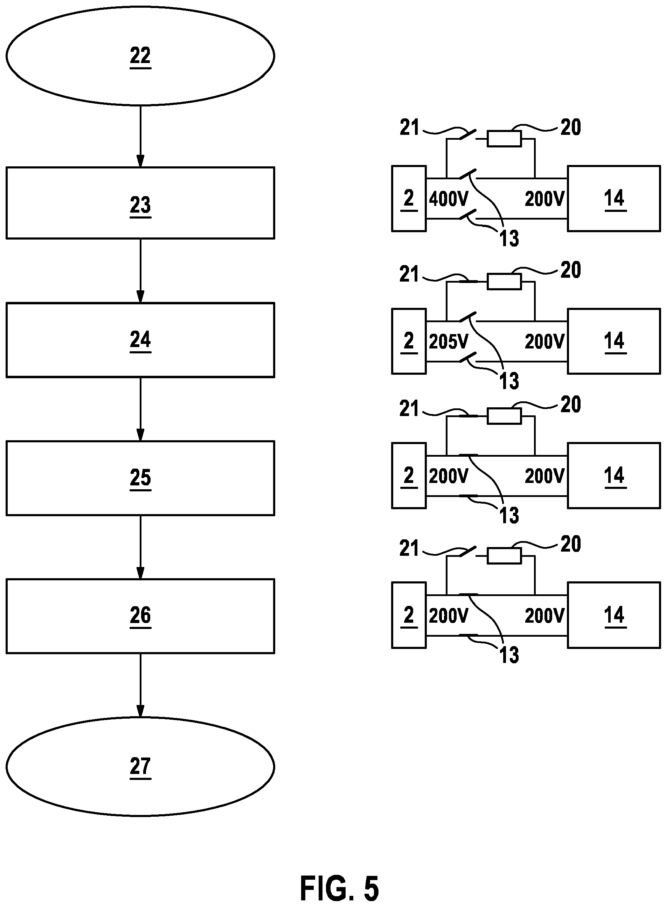

Fig. 5 zeigt eine Betriebsstrategie eines Startablaufs der in den Figuren 2 und 3 dargestellten Anbindung einer Brennstoffzelle 2 an ein HV-Bordnetz 14 mit einem Vorladewiderstand mit eigenem Schütz. Neben den einzelnen Schritten sind rechts in der Fig. 5 bei entsprechendem Schaltungszustand des Schützes des Vorladewiderstandes bzw. der Hauptschütze 13 die an dem HV-Bordnetz 14 und der Brennstoffzelle 2 anliegenden typischen Spannungen dargestellt. Nach Initiierung des Startvorganges 22, beispielsweise beim Anschalten oder Starten eines Fahrzeuges, erfolgt in einem ersten Schritt 23 die Aufheizung der Brennstoffzelle 2 bzw. des Stacks. Dabei erreicht die Brennstoffzelle 2 eine Spannung von 400 V. Demgegenüber liegt am HV-Bordnetz 14 eine Spannung von 200 V an. Die Spannungsdifferenz beträgt demnach 200 Volt. Nachdem die Brennstoffzelle 2 aufgeheizt ist, schaltet, wie in Figur 3 dargestellt, der Vorladewiderstand 20 mit eigenem Schütz 21 in einem folgenden Schritt 24 zu und reduziert durch den hochohmigen Widerstand die von der Brennstoffzelle 2 anliegende, genauer gesagt, die von der Brennstoffzelle 2 abgehende Spannung auf ca. das Spannungsniveau des HV-Bordnetzes 14, nämlich vorliegend auf ca. 200 V, genauer gesagt auf 205 V. Nach Niveauanpassung der Spannung der Brennstoffzelle 2 und des HV-Bordnetzes 14 schalten die Hauptschütze 13 in einem weiteren Schritt 25 zu. In einem darauf folgenden Schritt 26, der vor dem Ende des (Gefrier-) Starts 27 steht, öffnet der Vorladewiderstand und ist damit von der Brennstoffzelle 2 und dem HV-Bordnetz 14 getrennt.

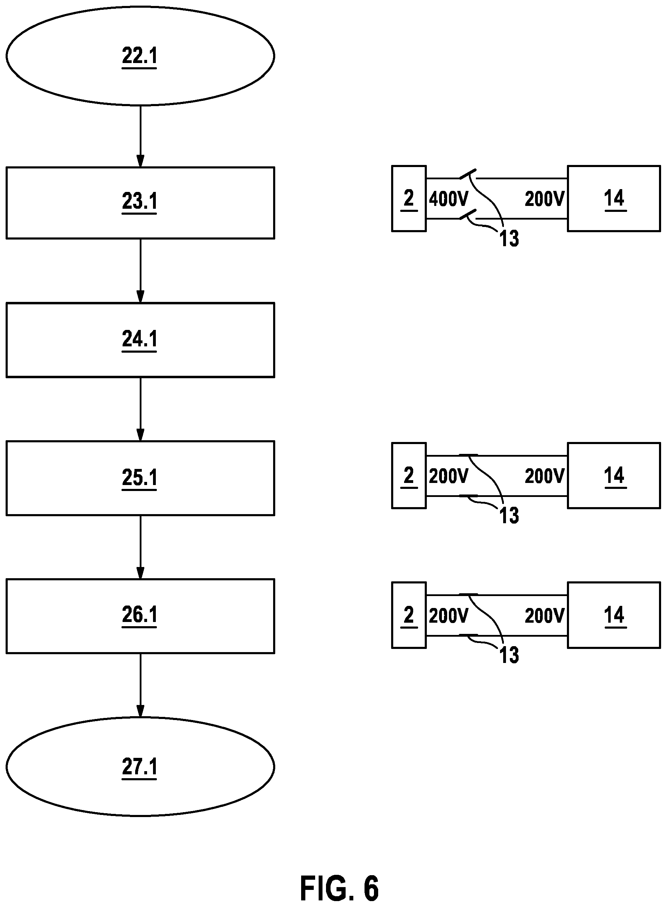

Fig. 6 zeigt den Startablauf einer Brennstoffzelle 2 mit dem erfindungsgemäßen Brennstoffzellensystem 1, genauer gesagt dessen elektrische Topologie, d.h. ohne Vorladewiderstand 20 mit eigenem Schütz 21. Auf der rechten Seite sind die Schaltungszustände mit typischen Spannungen dargestellt. Nach Initiierung des Startvorganges 22.1, beispielsweise beim Anschalten oder Starten eines Fahrzeuges, erfolgt in einem ersten Schritt 23.1 die Aufheizung der Brennstoffzelle 2 bzw. des Stacks. Dabei erreicht die Brennstoffzelle 2 eine Spannung von 400 V. Demgegenüber liegt am HV-Bordnetz 14 eine Spannung von 200 V an. Die Spannungsdifferenz beträgt demnach 200 Volt. Nachdem die Brennstoffzelle 2 aufgeheizt ist, wird in einem nächsten Schritt 24.1 der von der Brennstoffzelle 2 zu produzierende Strom durch Reduzierung der Sauerstoffzuführung begrenzt. Die Sauerstoffbegrenzung erfolgt beispielsweise, wie bereits für Figur 1 beschrieben, durch eine Verringerung der Drehzahl des Verdichters 10, eine Abzweigung der Luft durch einen Bypass oder durch eine Luftverdünnung mit Abluft.

Nach Sicherstellung einer geringen Sauerstoffmenge in der Kathode werden in einem nächsten Schritt 25.1 die Hauptschütze 13 zugeschaltet. Der elektrische Strom ist durch das reduzierte Sauerstoffangebot auf einen geringen Wert begrenzt, der viel kleiner als der maximale Strom ist. Somit wird die Beschädigung oder gar Lebensdauerreduzierung kritischer elektrischen Bauteile verhindert. Vorliegend wird die Spannung der Brennstoffzelle 2 auf das Spannungsniveau des HV-Bordnetzes 14 reduziert, nämlich wie dargestellt auf 200 Volt.

Nach Zuschaltung der Hauptschütze 13 wird in einem darauf folgenden Schritt 26.1, der vor dem Ende des (Gefrier-) Starts 27.1 steht, die Strom- bzw. Sauerstoffmengenbegrenzung aufgehoben, damit der gewünschte Strom für den Normalbetrieb fließen kann.

Die Erfindung beschränkt sich in ihrer Ausführung nicht auf das vorhergehend angegebene bevorzugte Ausführungsbeispiel beziehungsweise auf das vorhergehend angegebene Verfahren. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

## Patentansprüche

1. Verfahren zum Betreiben einer Brennstoffzelle (2) über ein Brennstoffzellensystem (1), wobei die Brennstoffzelle (2) einen Anodenraum (3) und einen von dem Anodenraum (3) getrennten Kathodenraum (4) aufweist, und wobei das Brennstoffzellensystem (1) eine Kathodengasquelle (5), eine mit der Kathodengasquelle (5) verbundene Gaszuführung (6) zum Zuführen von Kathodengas in den Kathodenraum (4) und eine mit dem Kathodenraum (4) verbundene Abluftleitung (7) zur Ableitung von Abluft aus dem Kathodenraum (4) aufweist, und wobei die Gaszuführung (6) und die Abluftleitung (7) über wenigstens ein Gasstromregulierungselement (8, 9) verbunden sind, welches in Abhängigkeit eines Betriebsstatus der Brennstoffzelle (2) die Gaszuführung (6) in Richtung der Abluftleitung (7) und/oder die Abluftleitung (7) in Richtung der Gaszuführung (6) öffnet, umfassend die Verfahrensschritte:
a) Inbetriebnahme, insbesondere (Gefrier-) Start, der Brennstoffzelle (2),
b) Limitierung der an der Brennstoffzelle (2) anliegenden Spannung durch Verarmung des Kathodengases durch Zuleitung von Abluft in die Gaszuführung (6) über das Gasstromregulierungselement (8) und/oder Ableitung des Kathodengases in die Abluftleitung (7) über das Gasstromregulierungselement (9) und/oder Verringerung des Massenstroms des Kathodengases durch Drehzahlverringerung eines Verdichters (10), der mit der Gaszuführung (6) verbunden ist,
c) Zuschalten von Hauptschützen (13), die die Brennstoffzelle (2) mit einem HV-Bordnetz (14) verbinden,
d) Aufheben der Limitierung der an der Brennstoffzelle (2) anliegenden Spannung.

2. Verfahren nach Anspruch 1, **dadurch gekennzeichnet, dass** bei Zuleitung von Abluft in die Gaszuführung (6) der Sauerstoffgehalt des Kathodengases über wenigstens eine A-Sonde (12) vor der Zuführung des Kathodengases in den Kathodenraum (4) gemessen wird.

## Claims

1. Method for operating a fuel cell (2) by means of a fuel cell system (1), wherein the fuel cell (2) has an anode chamber (3) and a cathode chamber (4) which is separated from the anode chamber (3), and wherein the fuel cell system (1) has a cathode gas source (5), a gas supply (6), which is connected to the cathode gas source (5), for supplying cathode gas into the cathode chamber (4), and a waste air line (7), which is connected to the cathode chamber (4), for discharging waste air from the cathode chamber (4), and wherein the gas supply (6) and the waste air line (7) are connected by means of at least one gas flow regulating element (8, 9) which, depending on an operating status of the fuel cell (2), opens the gas supply (6) in the direction of the waste air line (7) and/or opens the waste air line (7) in the direction of the gas supply (6), comprising the method steps of:
a) starting up, in particular (freeze-)starting, the fuel cell (2),
b) limiting the voltage applied to the fuel cell (2) by depleting the cathode gas by feeding waste air into the gas supply (6) by means of the gas flow regulating element (8) and/or discharging the cathode gas into the waste air line (7) by means of the gas flow regulating element (9) and/or reducing the mass flow of the cathode gas by reducing the rotation speed of a compressor (10) which is connected to the gas supply (6),
c) switching on main contactors (13) which connect the fuel cell (2) to a high-voltage on-board electrical system (14),
d) cancelling the limiting of the voltage applied to the fuel cell (2).

2. Method according to Claim 1, **characterized in that**, when waste air is fed into the gas supply (6), the oxygen content of the cathode gas is measured by means of at least one λ probe (12) before the cathode gas is supplied into the cathode chamber (4).

## Revendications

1. Procédé pour faire fonctionner une pile à combustible (2) par le biais d'un système de pile à combustible (1), la pile à combustible (2) possédant un espace d'anode (3) et un espace de cathode (4) séparé de l'espace d'anode (3), et le système de pile à combustible (1) possédant une source de gaz de cathode (5), une arrivée de gaz (6) reliée à la source de gaz de cathode (5) et destinée à acheminer du gaz de cathode dans l'espace de cathode (4) et une conduite d'évacuation d'air (7) reliée à l'espace de cathode (4) et destinée à évacuer l'air vicié hors de l'espace de cathode (4), et l'arrivée de gaz (6) et la conduite d'évacuation d'air (7) étant reliées par le biais d'au moins un élément de régulation de débit de gaz (8, 9), lequel ouvre l'arrivée de gaz (6) en direction de la conduite d'évacuation d'air (7) et/ou la conduite d'évacuation d'air (7) en direction de l'arrivée de gaz (6) en fonction d'un état de fonctionnement de la pile à combustible (2), comprenant les étapes suivantes :
a) mise en service, notamment démarrage (gelé) de la pile à combustible (2),
b) limitation de la tension appliquée à la pile à combustible (2) par appauvrissement du gaz de cathode en acheminant de l'air vicié dans l'arrivée de gaz (6) par le biais de l'élément de régulation de débit de gaz (8) et/ou évacuation du gaz de cathode dans la conduite d'évacuation d'air (7) par le biais de l'élément de régulation de débit de gaz (9) et/ou réduction du débit massique du gaz de cathode par réduction de la vitesse de rotation d'un compresseur (10) qui est relié à l'arrivée de gaz (6),
c) fermeture de contacteurs principaux (13) qui relient la pile à combustible (2) à un réseau de bord HT (14),
d) suppression de la limitation de la tension appliquée à la pile à combustible (2).

2. Procédé selon la revendication 1, **caractérisé en ce que** lors de l'acheminement de l'air vicié dans l'arrivée de gaz (6), la teneur en oxygène du gaz de cathode est mesurée par le biais d'au moins une sonde λ (12) avant l'amenée du gaz de cathode dans l'espace de cathode (4).
